# EUROPÄISCHE PATENTSCHRIFT

(11) **EP 0 815 007 B1**
(45) Veröffentlichungstag und Bekanntmachung des Hinweises auf die Patenterteilung: **16.12.1998**
(21) Anmeldenummer: 96907343.6
(22) Anmeldetag: 04.03.1996
(51) Int. Cl.: B64D 1/14, F16F 9/04

(54) **LANDESTOSSDÄMPFER**
LANDING SHOCK ABSORBER
AMORTISSEUR DE CHOCS D'ATTERRISSAGE

(30) Priorität: 15.03.1995 DE 19509245
(43) Veröffentlichungstag der Anmeldung: 07.01.1998
(73) Patentinhaber: STN ATLAS Elektronik GmbH, 28309 Bremen (DE)
(72) Erfinder: CLAUSNITZER, Hans-Jürgen, D-27751 Delmenhorst (DE); SCHWEREN, Johann, D-28755 Bremen (DE)
(74) Vertreter: Schulz, Klaus, Patentassessor, Dipl.-Ing.
(86) Internationale Anmeldenummer: EP9600906
(87) Internationale Veröffentlichungsnummer: WO9628344

(56) Entgegenhaltungen:
- DE-A- 3 323 348
- FR-A- 2 224 325
- US-A- 2 974 912
- US-A- 2 998 601
- US-A- 3 266 757

## Beschreibung

Die Erfindung betrifft einen Landestoßdämpfer für mit Bremsfallschirmen ausgestattete Luftlasten oder unbemannte Flugkörper der im Oberbegriff des Anspruchs 1 definierten Gattung.

Bei einem bekannten Landestoßdämpfer dieser Art (DE 33 23 348 C2) sind Außensack und Innensack jeweils von einer luftdichten, plastisch verformbaren Schlauchfolie gebildet, wobei die beiden Schlauchfolien ineinander gesteckt sind und dabei das Ende einer jeden Schlauchfolie eingestülpt und durch das andere Ende hindurchgezogen ist. Zwischen den sich ergebenden vier Wandungen aller ineinandergestülpten Enden verbleiben Öffnungen zum Einleiten von Druckgas sowohl in den Innensack als auch in den Außensack, wobei der Füllgrad des Innen- und Außensacks über Ventilelemente unterschiedlich einstellbar ist. Die Einstellung des Verhältnisses der Gasfüllungen in Innen-und Außensack erfolgt in Abhängigkeit von Parametern, wie Sinkgeschwindigkeit und Gewicht der Luftlast bzw. des Flugkörpers. Innen- und Außensack können unterschiedliches Volumen aufweisen.

Bei einem solchen Landestoßdämpfer findet die Landestoßdämpfung über die Dehnung der Kissenhäute und die Ventile statt. Diese Dämpfung ist relativ träge, so daß nicht sicher ausgeschlossen werden kann, daß die Luftlast bzw. der Flugkörper beim Landen springt und sich überschlägt. Darüber hinaus ist die Seitenstabilität beim Aufprall relativ gering.

Der Erfindung liegt die Aufgabe zugrunde, bei einem Landestoßdämpfer der eingangs genannten Art sowohl dessen Seitenstabilität beim Aufprall zu erhöhen als auch ein Überschlagen der Luftlast bzw. des Flugkörpers zuverlässig auszuschließen. Darüber hinaus soll der Landestoßdämpfer durch die Möglichkeit der einfachen Beeinflussung seiner Dämpfungscharakteristik individuell an seinen jeweiligen Einsatzzweck anpaßbar sein, so daß jeweils sein Funktionsoptimum erreichbar ist.

Die Aufgabe ist bei einem Landestoßdämpfer der im Oberbegriff des Anspruchs 1 angegebenen Gattung erfindungsgemäß durch die Merkmale im Kennzeichenteil des Anspruchs 1 gelöst.

Bei dem erfindungsgemäßen Landestoßdämpfer erfolgt die Stoßenergieaufnahme im wesentlichen durch den Mehrfach-Luftkammer-Innensack, wobei der Dämpfungsweg durch die Dehnbarkeit der Innensackfolie und durch die Anzahl der Luftkammern bestimmt werden kann. Beim Aufprall auf den Boden werden die Luftkammern im Innensack stark zusammengedrückt, wobei ein bestimmter Überdruck aufgebaut wird, der den Innensack zerstört. Die aus den Luftkammern austretende Luft wird über die Drosselöffnungen im Außensack definiert entlüftet und somit der Überdruck kontrolliert zeitverzögert abgebaut. Dies erzielt eine sehr gute Dämpfung mit kontrollierbarem Dämpfungsweg. Die stramm aufgeblasenen Luftkammern des Innensacks bieten eine hohe Seitenstabilität beim Aufprall. Der in der Herstellung etwas teurere Außensack aus reißfestem, engmaschigem Gewebe mit Drosselöffnungen ist zu 90 % wiederverwendbar, was zur Senkung der Betriebskosten beiträgt.

Die Herstellung des Landekissens (Innen- und Außensack) ist einfach, sie bedarf nur eines (scheibenförmigen) Zuschnitts aus Bahnenware, der zu einem ballonartigen Gebilde verschweißt oder vernäht wird. Die Folie bzw. das Gewebe ist handelsüblich, die Drosselöffnungen werden auf der Peripherie oberhalb der Nahtreihe angebracht. Der mit einem größeren Volumen als die Summe aller aufgeblasenen Luftkammern des Innensacks ausgeführte Außensack formt sich beim Aufblasen im Landefall zu einer Art Zylinder. Das Packvolumen des Landestoßdämpfers ist klein, komplizierte Ventile sind nicht erforderlich.

Vorteilhafte Ausführungsformen des erfindungsgemäßen Landestoßdämpfers mit vorteilhaften Ausgestaltungen und Weiterbildungen der Erfindung sind in den nachfolgenden Ansprüchen angegeben.

Gemäß einer bevorzugten Ausführungsform der Erfindung weist der Innensack definierte Sollreißstellen auf, die bei Druckspitzen in den Luftkammern aufplatzen. Durch diese Sollreißstellen im Innensack kann das Aufreißen der Luftkammern durch den beim Landestoß sich aufbauenden Überdruck kontrolliert und auch sukzessiv gestaffelt eingestellt werden, so daß der Dämpfungsweg über der Zeit hochgenau beeinflußt werden kann.

Gemäß einer zweckmäßigen Ausführungsform der Erfindung erfolgt das Aufblasen des Innensacks mit geringem Fülldruck, wobei bereits wenige Zehntel Atmosphärenüberdruck genügen. Der Aufblasvorgang kann damit schnell und mit nur geringem Druckgasvorrat durchgeführt werden, was Bauraum einspart.

Gemäß einer vorteilhaften Ausführungsform der Erfindung weist das Landekissen eine zentrale Befestigungsvorrichtung mit Aufblasöffnung für den Innensack zur Befestigung an der Unterseite der Luftlast oder des Flugkörpers auf. Durch die zentrale Befestigung von Innen- und Außensack werden die in der Praxis zu erwartenden seitlichen Belastungen beim Landestoß wesentlich kompensiert. Die der Bewegung abgekehrte Seite des Landekissens wird gestrafft, wodurch die Bodenkräfte in den Rumpf des Flugkörpers oder in die Luftlast eingeleitet werden.

Die Erfindung ist anhand eines in der Zeichnung dargestellten Ausführungsbeispiels im folgenden näher beschrieben. Es zeigen jeweils in schematischer Darstellung:
- Fig. 1: einen unbemannten Flugkörper mit einem aktivierten Landestoßdämpfer in Seitenansicht,
- Fig. 2: einen Längsschnitt eines Landekissens des Landestoßdämpfers in Fig. 1,
- Fig. 3: eine vergrößerte Darstellung des Ausschnitts III in Fig. 2.

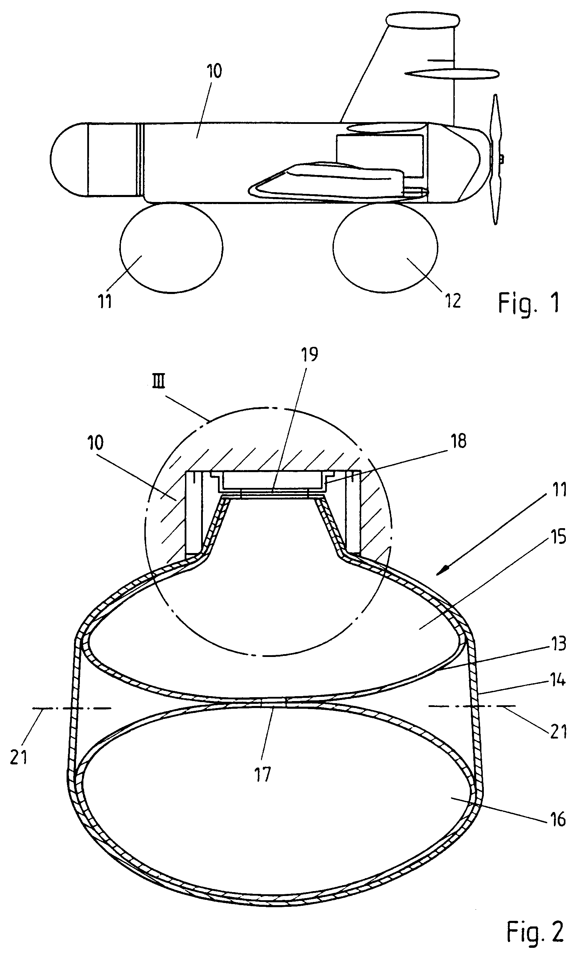

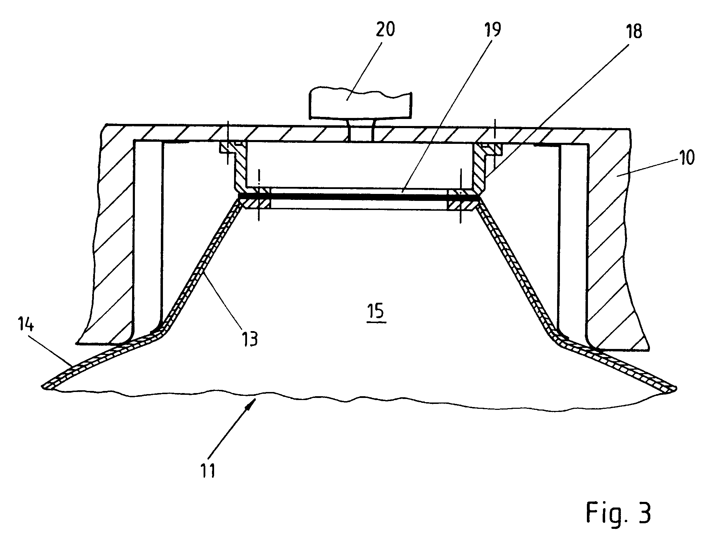

In Fig. 1 ist ein unbemannter, wiederverwendbarer Flugkörper 10 in Seitenansicht schematisch dargestellt. Für den Landevorgang ist der Flugkörper 10 oder das Fluggerät mit einem hier nicht dargestellten Bremsfallschirm zur Reduzierung seiner Sinkgeschwindigkeit und mit einem Landestoßdämpfer zur Dämpfung des Aufpralls auf dem Boden ausgestattet. Der Landestoßdämpfer besteht aus zwei Landekissen 11, 12, die im Flugkörper 10 verpackt sind und zum Landen aufgeblasen werden. Die Anordnung der Landekissen 11, 12 ist dabei so getroffen, daß sie jeweils nahe dem Bug und dem Heck des Flugkörpers 10 an dessen Unterseite liegen. Der Aufbau des bugnahen vordern Landekissens 11 und des hecknahen hinteren Landekissens 12 ist identisch und für das vordere Landekissen 11 in Fig. 2 und 3 im einzelnen dargestellt.

Das Landekissen 11 ist zweischalig aufgebaut und weist einen Innensack 13 und einen diesen umschließenden Außensack 14 auf. Der Innensack 13 ist in zwei Luftkammern 15, 16 unterteilt, die über eine Öffnung 17 miteinander in Verbindung stehen. Der Innensack 13 mit seinen Luftkammern 15, 16 besteht aus einer druckdichten, plastisch verformbaren Folie, während der Außensack 14 aus einem reißfesten Polyamid-Gewebe mit geringer Luftdurchlässigkeit hergestellt ist. Innensack 13 und Außensack 14 sind mit ihren Öffnungen in einer zentralen Befestigungsvorrichtung 18 aufgenommen (Fig. 2 und 3), die zur Befestigung an der Unterseite des Flugkörpers 10 eingerichtet ist. Die Befestigungsvorrichtung 18 weist eine Aufblasöffnung 19 auf, die von der Öffnung des Innensacks 13 luftdicht umschlossen ist. Durch diese Aufblasöffnung 19 hindurch wird der Innensack 13 mittels Druckgas aus einer im Flugkörper 10 vorhandenen Druckgasflasche 20 (Fig. 3) aufgeblasen, wobei sich die beiden Luftkammern 15, 16 prall füllen und den Außensack 14, dessen Volumen größer ist als die Summe der Volumen der aufgeblasenen Luftkammern 15, 16, zu einer Art Zylinder formen (Fig. 2). Das Aufblasen des Innensacks 13 erfolgt mit geringem Aufblasdruck von nur wenigen Zehnteln Atmosphärenüberdruck. In der Folie des Innensacks 13 sind Sollreißstellen vorgesehen, die bei Druckspitzen in den Luftkammern 15, 16 aufplatzen. Im Gewebe des Außensacks 14 sind Drosselöffnungen 21 vorgesehen, die in Fig. 2 durch strichpunktierte Lochachsen angedeutet sind. Die Herstellung von Innensack 13 und Außensack 14 erfolgt mittels scheibenförmigen Zuschnitts aus Bahnenware, der dann im Falle des Innensacks 13 verschweißt und im Falle des Außensacks 14 vernäht wird, so daß sich das ballonartige Gebilde des Landekissens 11 ergibt. Die Drosselöffnungen 21 werden auf der Peripherie des Außensacks 14 oberhalb der Nahtreihe angebracht. Die materialschwächenden Schweißnähte bilden die Sollreißstellen der einzelnen Luftkammern 15, 16.

Beim Landevorgang werden beim Auftreffen des Flugkörpers 10 auf dem Boden die Landekissen 11, 12 durch den Landestoß stark zusammengedrückt. Durch die Aufprallenergie wird ein bestimmter Überdruck in dem Innensack 13 aufgebaut. Durch diesen Überdruck platzt der Innensack 13 an den durch die materialgeschwächten Schweißnähte gebildeten Sollreißstellen auf, und die Luft aus den Luftkammern 15, 16 strömt durch die Drosselöffnungen 21 im Außensack 14. Da die Luft gesteuert durch die Drosselöffnungen 21 austritt, tritt eine Verzögerung ein, die den Dämpfungsvorgang kontrollierbar macht. Ein Springen bzw. ein Überschlagen des Flugkörpers 10 beim Landen wird damit verhindert. Durch Vorsehen von zwei oder mehreren Luftkammern 15, 16 im Innensack 13 kann der Dämpfungsweg beeinflußt werden.

Die Erfindung ist nicht auf das beschriebene Ausführungsbeispiel beschränkt. So kann der Landestoßdämpfer in gleicher Weise an Luftlasten befestigt werden, die von Transportflugzeugen abgeworfen werden und an Lastfallschirmen zu Boden sinken.

## Patentansprüche

1. Landestoßdämpfer für mit Bremsfallschirmen ausgestattete Luftlasten oder unbemannte Flugkörper (10), mit mindestens einem aufblasbaren Landekissen (11, 12) zur Aufpralldämpfung, das einen aufblasbaren Innensack (13) und einen den Innensack (13) umschließenden Außensack (14) aufweist, dadurch gekennzeichnet, daß der Innensack (13) aus einer druckdichten, plastisch verformbaren Folie besteht und in mehrere, über mindestens eine Öffnung (17) miteinander in Verbindung stehende, aufblasbare Luftkammern (15, 16) unterteilt ist und daß der mit einem gegenüber den aufgeblasenen Luftkammern (15, 16) größeren Innenvolumen ausgestattete Außensack (14) aus einem reißfesten Gewebe, vorzugsweise Polyamid-Gewebe, mit geringer Luftdurchlässigkeit besteht und eine Mehrzahl von genau definierten Drosselöffnungen (21) aufweist.

2. Landestoßdämpfer nach Anspruch 1, dadurch gekennzeichnet, daß der Innensack (13) definierte Sollreißstellen aufweist, die bei Druckspitzen in den Luftkammern (15, 16) aufplatzen.

3. Landestoßdämpfer nach Anspruch 2, dadurch gekennzeichnet, daß das Aufblasen der Luftkammern (15, 16) im Innensack (13) mit geringem Fülldruck, der vorzugsweise nur wenige Zehntel über Atmosphärendruck liegt, erfolgt.

4. Landestoßdämpfer nach einem der Ansprüche 1 bis 3, dadurch gekennzeichnet, daß das Landekissen (11, 12) eine zentrale Befestigungsvorrichtung (18) mit Aufblasöffnung (19) für den Innensack (13) zur Befestigung an der Unterseite der Luftlast oder des unbemannten Flugkörpers (10) aufweist.

5. Landestoßdämpfer nach einem der Ansprüche 1 bis 4, dadurch gekennzeichnet, daß das Aufblasen des Innensacks (13) mittels Druckgas aus einer Druckgasflasche (20) oder einem Gasgenerator erfolgt.

## Claims

1. Landing shock absorber for airborne loads equipped with brake parachutes or unmanned craft (10), with at least one inflatable landing cushion (11, 12) for damping impact, which has an inflatable inner big (13) and an outer bag (14) enclosing the inner bag, characterised in that the inner bag (13) is made of a pressuretight plastically deformable foil and is subdivided into several inflatable air chambers (15, 16) connecting to one another via at least one opening (17), and that the outer bag (14) provided with a larger internal volume than the inflated air chambers (15, 16) is made of a tear-resistant fabric, preferably polyamide fabric, with low air permeability and has a plurality of precisely defined throttle openings (21).

2. Landing shock absorber according to Claim 1, characterised in that the inner bag (13) has defined predetermined tearing points which burst open in the case of pressure peaks in the air chambers (15, 16).

3. Landing shock absorber according to Claim 2, characterised in that inflation of the air chambers (15, 16) in the inner bag (13) occurs at a low filling pressure, which preferably lies only a few tenths above atmospheric pressure.

4. Landing shock absorber according to one of Claims 1 to 3, characterised in that the landing cushion (11, 12) has a central fastening device (18) with inflation opening (19) for the inner bag (13) for fastening to the underside of the air load or the unmanned craft (10).

5. Landing shock absorber according to one of Claims 1 to 4, characterised in that inflation of the inner bag (13) is achieved by means of compressed gas from a compressed gas bottle (20) or a gas generator.

## Revendications

1. Amortisseur de chocs d'atterrissage pour charges aériennes ou engins volants non habités (10) équipés de parachutes décélérateurs, comprenant au moins un coussin d'atterrissage gonflable (11, 12) pour amortir l'impact, qui présente une enveloppe interne gonflable (13) et une enveloppe externe (14) entourant l'enveloppe interne (13), caractérisé en ce qui l'enveloppe interne (13) est constituée d'une feuille étanche à la pression à déformation plastique et est subdivisée en plusieurs chambres à air (15, 16) gonflables qui sont en communication l'une avec l'autre mutuelle via au moins une ouverture (17) et en ce que l'enveloppe externe (14), ayant un volume interne plus important vis-à-vis des chambres à air gonflées (15, 16) est constituée d'un tissu résistant à la déchirure, de préférence un tissu de polyamide, avec une faible perméabilité à l'air et présente une série d'ouvertures d'étranglement (21) définies de manière précise.

2. Amortisseur de chocs d'atterrissage selon la revendication 1, caractérisé en ce que l'enveloppe interne (13) présente des points de déchirure définis, qui éclatent lors de pointes de pression dans les chambres à air (15, 16).

3. Amortisseur de chocs d'atterrissage selon la revendication 2, caractérisé en ce que le gonflage des chambres à air (15, 16) de l'enveloppe interne (13) se fait à faible pression de remplissage, qui se situe de préférence à un niveau de seulement quelques dixièmes de la pression atmosphérique.

4. Amortisseur de chocs d'atterrissage selon l'une quelconque des revendications 1 à 3, caractérisé en ce que le coussin d'atterrissage (11, 12) présente un dispositif de fixation central (18) avec une ouverture de gonflage (19) pour l'enveloppe interne (13) afin de permettre une fixation à la partie inférieure de la charge aérienne ou de l'engin volant non habité (10).

5. Amortisseur de chocs d'atterrissage selon l'une quelconque des revendications 1 à 4, caractérisé en ce que le gonflage de l'enveloppe interne (13) se fait au moyen de gaz comprimé provenant d'une bouteille de gaz comprimé (1) ou d'un générateur de gaz.
